# EUROPEAN PATENT SPECIFICATION

(11) **EP 3 546 187 B1**
(45) Date of publication and mention of the grant of the patent: **16.09.2020**
(21) Application number: 19163457.5
(22) Date of filing: 18.03.2019
(51) Int. Cl.: B29C 45/83, B29C 45/17

(54) **INJECTION MOLDING MACHINE**
SPRITZGIESSMASCHINE
MACHINE DE MOULAGE À INJECTION

(30) Priority: 28.03.2018 JP 2018062804
(43) Date of publication of application: 02.10.2019
(73) Proprietor: Sumitomo Heavy Industries, Ltd., Tokyo 141-6025 (JP)
(72) Inventor: MIYATAKE, Tsutomu, Chiba-shi, Chiba, 263-0001 (JP)
(74) Representative: Louis Pöhlau Lohrentz

(56) References cited:
- EP-A1- 1 265 008
- DE-A1- 10 319 631

## Description

### BACKGROUND OF THE INVENTION

### Field of the Invention

Certain embodiments of the present invention relate to an injection molding machine.

### Description of Related Art

An injection molding machine is known, which has a motion conversion mechanism including a screw shaft and a screw nut and in which the screw nut is fixed to a crosshead, the screw shaft is rotated by a mold clamping motor, and thus, the crosshead moves forward or rearward (Japanese Unexamined Patent Publication No. 2018-030356) . In addition, a lubricant is supplied to the motion conversion mechanism for lubrication, cooling, or the like.

European Patent Application Publication EP 1 265 008 A1 discloses an apparatus and a method for lubricating a feed mechanism of a forming machine, which comprises a conversion mechanism for converting rotational motion to rectilinear motion or vice versa and a lubrication oil circulation pipe for supplying lubrication oil to the conversion mechanism and collecting the supplied lubrication oil.

### SUMMARY OF THE INVENTION

Meanwhile, a lubricant supplied to a motion conversion mechanism may drip or the lubricant may be scattered by a centrifugal force generated when a screw shaft rotates or a forward or rearward movement of a screw nut. Moreover, fog (mist) of the lubricant may be generated by the scattering of the lubricant. There is a concern that an injection molding machine is contaminated by the lubricant or the mist of the lubricant or the lubricant adheres to a molding product.

Accordingly, an object of the present invention is to provide an injection molding machine which prevents contamination caused by a lubricant.

According to an aspect of the present invention, there is provided an injection molding machine including: a motion conversion mechanism which is used in at least one of an injection unit and a mold clamping unit and has a screw shaft and a screw nut lubricated by a lubricant; and a first cover into which the screw shaft is inserted and which is fixed to one end side of the screw nut, in which the first cover includes a cover body, a supply unit which blows air to the screw shaft in an internal space of the cover body, a first collection unit which collects the lubricant in the internal space of the cover body, and a seal member which seals a portion between the cover body and the screw shaft.

According to the present invention, it is possible to provide an injection molding machine which prevents contamination caused by a lubricant.

### BRIEF DESCRIPTION OF THE DRAWINGS

Fig. 1 is a view showing a state when a mold opening of an injection molding machine according to a first embodiment is completed.
Fig. 2 is a view showing a state when a mold of the injection molding machine according to the first embodiment is clamped.
Fig. 3 is a schematic sectional view explaining a configuration around a motion conversion mechanism of the injection molding machine according to the first embodiment.
Fig. 4 is a sectional view explaining a configuration of a nut cover.
Fig. 5 is a sectional view explaining the configuration of the nut cover in a state where a toggle support moves forward.
Fig. 6 is a schematic sectional view explaining a configuration around a motion conversion mechanism of an injection molding machine according to a second embodiment.

### DETAILED DESCRIPTION OF THE INVENTION

Hereinafter, embodiments of the present invention will be described with reference to the drawings. In each drawing, the same or corresponding reference numerals are assigned to the same or corresponding configurations, and descriptions thereof are omitted.

### <<First Embodiment>>

### (Injection Molding Machine)

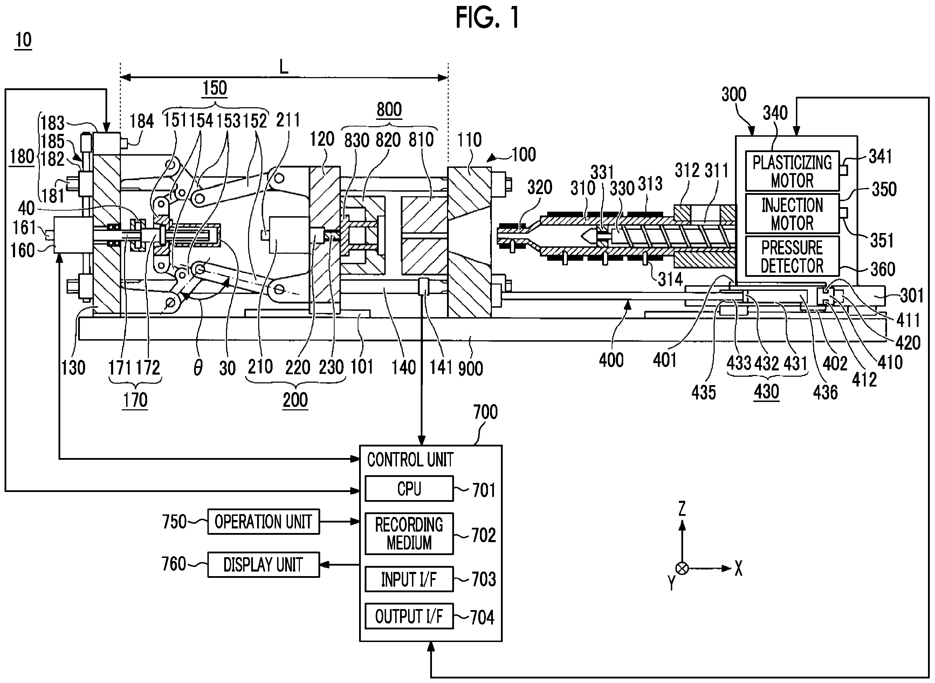

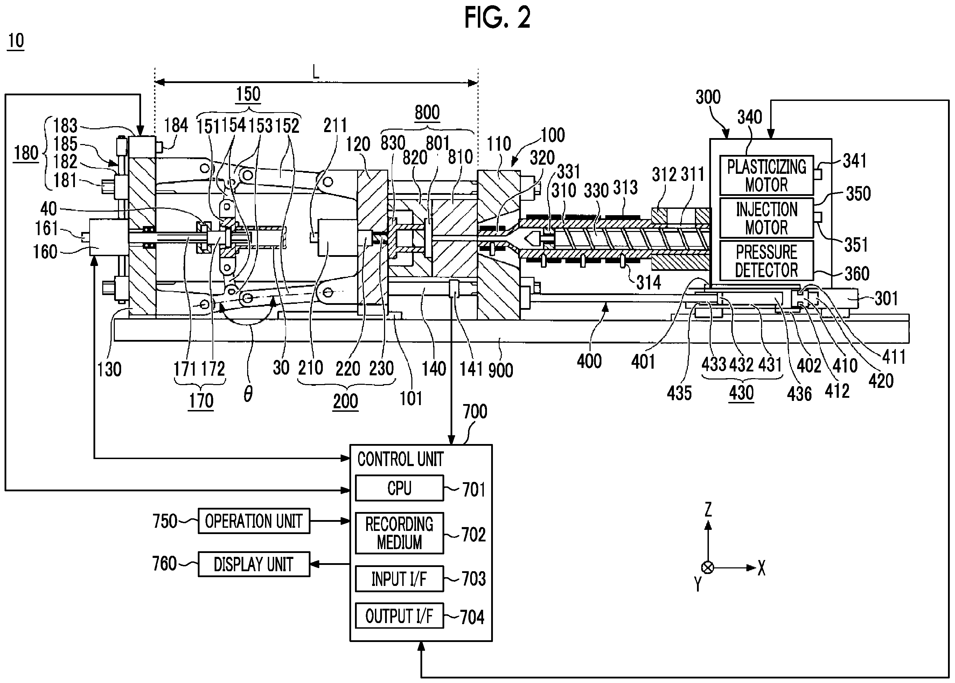

Fig. 1 is a diagram showing a state when a mold opening of an injection molding machine according to a first embodiment is completed. Fig. 2 is a diagram showing a state when a mold of the injection molding machine according to the first embodiment is clamped. In Figs. 1 and 2, an X direction, a Y direction, and a Z direction are directions perpendicular to each other. The X direction and the Y direction indicate a horizontal direction, and the Z direction indicates a vertical direction. In a case where a mold clamping unit 100 is a horizontal type mold clamping unit, the X direction is mold opening and closing directions, and the Y direction is a width direction of an injection molding machine 10. As shown in Figs. 1 and 2, the injection molding machines 10 includes the mold clamping unit 100, an ejector unit 200, an injection unit 300, a movement unit 400, a control unit 700, and a frame 900. Hereinafter, each component of the injection molding machine 10 will be described.

### (Mold Clamping Unit)

In descriptions of the mold clamping unit 100, a movement direction (right direction in Figs. 1 and 2) of a movable platen 120 when a mold is closed is defined as a front side, and a movement direction (left direction in Figs. 1 and 2) of the movable platen 120 when the mold is opened is defined as a rear side.

The mold clamping unit 100 performs closing, clamping, and opening on a mold unit 800. For example, the mold clamping unit 100 is a horizontal type clamping unit and the mold opening and closing directions are the horizontal direction. The mold clamping unit 100 includes a stationary platen 110, the movable platen 120, a toggle support 130, a tie bar 140, a toggle mechanism 150, a mold clamping motor 160, a motion conversion mechanism 170, and a mold space adjustment mechanism 180.

The stationary platen 110 is fixed to the frame 900. A stationary mold 810 is attached to a surface of the stationary platen 110 facing the movable platen 120.

The movable platen 120 is movable in the mold opening and closing directions with respect to the frame 900. A guide 101 which guides the movable platen 120 is placed on the frame 900. A movable mold 820 is attached to a surface of the movable platen 120 facing the stationary platen 110.

The movable platen 120 moves forward or rearward with respect to the stationary platen 110, and thus, closing, clamping, and opening of the mold are performed. The mold unit 800 includes the stationary mold 810 and the movable mold 820.

The toggle support 130 is connected so as to be separated from the stationary platen 110, and is placed on the frame 900 to be movable in mold opening and closing directions . In addition, the toggle support 130 may be movable along a guide which is placed on the frame 900. The guide of the toggle support 130 may be also used as the guide 101 of the movable platen 120.

In addition, in the present embodiment, the stationary platen 110 is fixed to the frame 900, and the toggle support 130 is movable in the mold opening and closing directions with respect to the frame 900. However, the toggle support 130 may be fixed to the frame 900, and the stationary platen 110 may be movable in the mold opening and closing directions with respect to the frame 900.

The stationary platen 110 and the toggle support 130 are connected to each other with a gap L in the mold opening and closing directions by the tie bar 140. Aplurality of (for example, four) tie bars 140 may be used. The tie bars 140 are parallel in the mold opening and closing directions and extend according to a mold clamping force. A tie bar strain detector 141 which detects strain of the tie bar 140 may be provided in at least one tie bar 140. The tie bar strain detector 141 sends a signal indicating a detection result to the control unit 700. The detection result of the tie bar strain detector 141 is used for detection or the like of the mold clamping force.

In addition, in the present embodiment, the tie bar strain detector 141 is used as a mold clamping force detector which detects the mold clamping force. However, the present invention is not limited to this. The mold clamping force detector is not limited to a strain gauge type detector, and may be a piezoelectric type detector, a capacitance type detector, a hydraulic type detector, an electromagnetic type detector, or the like, and an attachment position of the mold clamping force detector is also not limited to the tie bar 140.

The toggle mechanism 150 is disposed between the movable platen 120 and the toggle support 130 and moves the movable platen 120 in the mold opening and closing directions with respect to the toggle support 130. The toggle mechanism 150 includes a crosshead 151, a pair of link groups, or the like. Each link group includes a first link 152 and a second link 153 which are bendably/strechably connected to each other by pins or the like. The first link 152 is attached to the movable platen 120 so as to be oscillated by pins or like and the second link 153 is attached to the toggle support 130 so as to be oscillated by pins or the like. The second link 153 is attached to the crosshead 151 via a third link 154. If the crosshead 151 moves forward or rearward with respect to the toggle support 130, the first link 152 and the second link 153 are bent and stretched and the movable platen 120 moves forward or rearward with respect to the toggle support 130.

In addition, a configuration of the toggle mechanism 150 is not limited to the configuration shown in Figs. 1 and 2. For example, in Figs. 1 and 2, the number of nodes of each link group is five. However, the number of nodes may be four, and one end portion of the third link 154 may be connected to a node between the first link 152 and the second link 153.

The mold clamping motor 160 is attached to the toggle support 130 and operates the toggle mechanism 150. The mold clamping motor 160 moves the crosshead 151 forward or rearward with respect to the toggle support 130, and thus, the first links 152 and the second links 153 are bent and stretched, and the movable platen 120 moves forward or rearward with respect to the toggle support 130. The mold clamping motor 160 is directly connected to the motion conversion mechanism 170. However, the mold clamping motor 160 may be connected to the motion conversion mechanism 170 via a belt, a pulley, or the like.

The motion conversion mechanism 170 converts a rotary motion of the mold clamping motor 160 into a linear motion of the crosshead 151. The motion conversion mechanism 170 includes a screw shaft 171 and a screw nut 172 which is screwed to the screw shaft 171. A ball or a roller may be interposed between the screw shaft 171 and the screw nut 172.

The mold clamping unit 100 performs a mold closing process, a mold clamping process, a mold opening process, or the like under the control of the control unit 700.

In the mold closing process, the mold clamping motor 160 is driven to move the crosshead 151 forward to a mold closing completion position at a set speed. Accordingly, the movable platen 120 moves forward and the movable mold 820 comes into contact with the stationary mold 810. For example, a position or speed of the crosshead 151 is detected using a mold clamping motor encoder 161 or the like. The mold clamping motor encoder 161 detects the rotation of the mold clamping motor 160 and sends a signal indicating the detection result to the control unit 700. In addition, a crosshead position detector which detects the position of the crosshead 151 and a crosshead speed detector which detects the speed of the crosshead 151 are not limited to the mold clamping motor encoder 161, and a general detector can be used. In addition, a movable platen position detector which detects the position of the movable platen 120 and a movable platen speed detector which detects the speed of the movable platen 120 are not limited to the mold clamping motor encoder 161, and a general detector can be used.

In the mold clamping process, the mold clamping motor 160 is further driven to further move the crosshead 151 forward from the mold closing completion position to a mold clamping position, and thus, a mold clamping force is generated. When the mold is clamped, a cavity space 801 (refer to Fig. 2) is formed between the movable mold 820 and the stationary mold 810, and the cavity space 801 is filled with a liquid molding material by the injection unit 300. A filled molding material is solidified, and thus, a molding product can be obtained. A plurality of cavity spaces 801 may be provided, and in this case, a plurality of molding products can be simultaneously obtained.

In the mold opening process, the mold clamping motor 160 is driven to move the crosshead 151 rearward from the mold opening start position to a mold opening completion position at a set speed. Accordingly, the movable platen 120 moves rearward, and the movable mold 820 is separated from the stationary mold 810. Thereafter, the ejector unit 200 ejects the molding product from the movable mold 820.

Setting conditions in the mold closing process and the mold clamping process are collectively set as a series of setting conditions. For example, the speed or positions (including mold closing start position, speed switching position, mold closing completion position, and mold clamping position) of the crosshead 151 and the mold clamping force in the mold closing process and the mold clamping process are collectively set as a series of setting conditions. The mold closing start position, the speed switching position, the mold closing completion position, and the mold clamping position are arranged in this order from the rear side to the front side and indicate start points and end points of sections where the speed is set. The speed is set for each section. The speed switching position may be one or more. The speed switching position may not be set. Only one of the mold clamping position and the mold clamping force may be set.

Setting conditions are similarly set in the mold opening process. For example, the speed or positions (including mold opening start position, speed switching position, and mold opening completion position) of the crosshead 151 in the mold opening process are collectively set as a series of setting conditions. The mold opening start position, the speed switching position, and the mold opening completion position are arranged in this order from the front side to the rear side and indicate start points and end points of sections where the speed is set. The speed is set for each section. The speed switching position may be one or more. The speed switching position may not be set. The mold opening start position and the mold clamping position may be the same as each other. In addition, the mold opening completion position and the mold closing start position may be the same as each other.

In addition, instead of the speed, the positions, or the like of the crosshead 151, a speed, positions, or the like of the movable platen 120 may be set. Moreover, instead of the position (for example, the mold clamping position) of the crosshead or the position of the movable platen, the mold clamping force may be set.

Meanwhile, the toggle mechanism 150 amplifies a driving force of the mold clamping motor 160 and transmits the amplified driving force to the movable platen 120. An amplification magnification of the toggle mechanism 150 is also referred to as a toggle magnification. The toggle magnification is changed according to an angle θ (hereinafter, also referred to a "link angle θ") between the first link 152 and the second link 153. The link angle θ is obtained from the position of the crosshead 151. When the link angle θ is 180°, the toggle magnification becomes the maximum value.

In a case where a space of the mold unit 800 is changed by a change of the mold unit 800, a temperature change of the mold unit 800, or the like, a mold space adjustment is performed such that a predetermined mold clamping force is obtained when the mold is clamped. For example, in the mold space adjustment, the gap L between the stationary platen 110 and the toggle support 130 is adjusted such that the link angle θ of the toggle mechanism 150 at the time of a touch type where the movable mold 820 comes into contact with the stationary mold 810 becomes a predetermined angle.

The mold clamping unit 100 includes the mold space adjustment mechanism 180 which performs the mold space adjustment by adjusting the gap L between the stationary platen 110 and the toggle support 130. The mold space adjustment mechanism 180 includes a screw shaft 181 which is formed on a rear end portion of the tie bar 140, a screw nut 182 which is rotatably held by the toggle support 130, and a mold space adjustment motor 183 which rotates the screw nut 182 screwed to the screw shaft 181.

The screw shaft 181 and the screw nut 182 are provided for each tie bar 140. A rotation of the mold space adjustment motor 183 may be transmitted to a plurality of screw nuts 182 via a rotation transmission portion 185. The plurality of screw nuts 182 can be synchronously rotated with each other. In addition, it is possible to rotate the plurality of screw nuts 182 individually by changing a transmission path of the rotation transmission portion 185.

For example, the rotation transmission portion 185 includes a gear or the like. In this case, a driven gear is formed on an outer periphery of each screw nut 182, a drive gear is attached to an output shaft of the mold space adjustment motor 183, and an intermediate gear which engages with a plurality of driven gears and drives gears is rotatably held by a center portion of the toggle support 130. In addition, the rotation transmission portion 185 may include a belt, a pulley, or the like instead of the gear.

An operation of the mold space adjustment mechanism 180 is controlled by the control unit 700. The control unit 700 drives the mold space adjustment motor 183 to rotate the screw nut 182, and thus, the position of the toggle support 130 which rotatably holds the screw nut 182 with respect to the stationary platen 110 is adjusted, and the gap L between the stationary platen 110 and the toggle support 130 is adjusted.

In addition, in the present embodiment, the screw nut 182 may be rotatably held by the toggle support 130 and the tie bar 140 on which the screw shaft 181 is formed is fixed to the stationary platen 110. However, the present invention is not limited to this.

For example, the screw nut 182 may be rotatably held by the stationary platen 110 and the tie bar 140 may be fixed to the toggle support 130. In this case, it is possible to adjust the gap L by rotating the screw nut 182.

In addition, the screw nut 182 may be fixed to the toggle support 130 and the tie bar 140 may be held rotatably by the stationary platen 110. In this case, it is possible to adjust the gap L by rotating the tie bar 140.

In addition, the screw nut 182 maybe fixed to the stationary platen 110 and the tie bar 140 may be held rotatably by the toggle support 130. In this case, it is possible to adjust the gap L by rotating the tie bar 140.

The gap L is detected using a mold space adjustment motor encoder 184. The mold space adjustment motor encoder 184 detects a rotation amount or a rotation direction of the mold space adjustment motor 183 and sends a signal indicating a detection result to the control unit 700. The detection result of the mold space adjustment motor encoder 184 is used to monitor or control the position of the toggle support 130 or the gap L. In addition, a toggle support position detector which detects the position of the toggle support 130 and a gap detector which detects the gap L are not limited to the mold space adjustment motor encoder 184, and a general encoder can be used.

In the mold space adjustment mechanism 180, the gap L is adjusted by rotating one of the screw shaft 181 and the screw nut 182 which are screwed to each other. A plurality of the mold space adjustment mechanisms 180 may be used, and a plurality of the mold space adjustment motors 183 may be used.

In addition, in the present embodiment, the mold space adjustment mechanism 180 includes the screw shaft 181 which is formed on the tie bar 140 and the screw nut 182 which is screwed to the screw shaft 181 in order to adjust the gap L. However, the present invention is not limited to this.

For example, the mold space adjustment mechanism 180 may have a tie bar temperature controller which adjusts a temperature of the tiebar140. The tie bar temperature controller is attached to each tie bar 140, and the temperatures of the plurality of tie bars 140 are adjusted to be in conjunction with each other. As the temperature of the tie bar 140 increases, the tie bar 140 is lengthened by thermal expansion, and thus, the gap L increases. The temperatures of the plurality of tie bars 140 can be adjusted independently.

For example, the tie bar temperature controller includes a heating unit such as a heater and adjusts the temperature of the tie bar 140 by heating. The tie bar temperature controller includes a cooler such as a water cooling jacket and may adjust the temperature of the tie bar 140 by cooling. The tie bar temperature controller may include both the heating unit and the cooler.

In addition, the mold clamping unit 100 of the present embodiment is a horizontal type mold clamping unit in which the mold opening and closing directions are the horizontal direction. However, the mold clamping unit 100 may be a vertical type mold clamping unit in which the mold opening and closing directions are the upward-downward direction. The vertical type mold clamping unit has a lower platen, an upper platen, a toggle support, a tie bar, a toggle mechanism, a mold clamping motor, or the like. One of the lower platen and the upper platen is used for a stationary platen, and the other one is used for a movable platen. A lower mold is attached to the lower platen and an upper mold is attached to the upper platen. The upper mold and the lower mold constitutes a mold unit. The lower mold maybe attached to the lower platen via a rotary table. The toggle support is disposed below the lower platen and is connected to the upper platen via the tie bar. The tie bar connects the upper platen and the toggle support with a gap therebetween in the mold opening and closing directions. The toggle mechanism is disposed between the toggle support and the lower platen and lifts and lowers the movable platen. The mold clamping motor operates the toggle mechanism. In a case where the mold clamping unit is the vertical type mold clamping unit, in general, the number of the tie bars is three. In addition, the number of the tie bars is not limited to three.

In addition, the mold clamping unit 100 of the present embodiment has the mold clamping motor 160 as a drive source. However, the mold clamping unit 100 may have a hydraulic cylinder instead of the mold clamping motor 160. In addition, the mold clamping unit 100 may have a linear motor for opening and closing a mold and may have an electromagnet for clamping a mold.

### (Ejector Unit)

Similarly to the descriptions of the mold clamping unit 100, in descriptions of the ejector unit 200, the movement direction (right direction in Figs. 1 and 2) of the movable platen 120 when the mold is closed is defined as the front side, and the movement direction (left direction in Figs. 1 and 2) of the movable platen 120 when the mold is opened is defined as the rear side.

The ejector unit 200 ejects the molding product from the mold unit 800. The ejector unit 200 includes an ejector motor 210, a motion conversion mechanism 220, an ejector rod 230, or the like.

The ejector motor 210 is attached to the movable platen 120. The ejector motor 210 is directly connected to the motion conversion mechanism 220. However, the ejector motor 210 may be connected to the motion conversion mechanism 220 via a belt, a pulley, or the like.

The motion conversion mechanism 220 converts a rotary motion of the ejector motor 210 into a linear motion of the ejector rod 230. The motion conversion mechanism 220 includes a screw shaft and a screw nut which is screwed to the screw shaft. A ball or a roller may be interposed between the screw shaft and the screw nut.

The ejector rod 230 can move forward or rearward through a through-hole of the movable platen 120. A front end portion of the ejector rod 230 comes into contact with a movable member 830 which is disposed to be movable forward or rearward inside the movable mold 820. The front end portion of the ejector rod 230 may be connected to the movable member 830 or may not be connected to the movable member 830.

The ejector unit 200 performs an ejection process under the control of the control unit 700.

In the ejection process, the ejector motor 210 is driven to move the ejector rod 230 forward from a standby position to an ejection position at a set speed, and thus, the movable member 830 moves forward and the molding product is ejected. Thereafter, the ejector motor 210 is driven to move the ejector rod 230 rearward at a set speed, and thus, the movable member 830 moves rearward to an original standby position. For example, a position or speed of the ejector rod 230 is detected using an ejector motor encoder 211. The ejector motor encoder 211 detects the rotation of the ejector motor 210 and sends a signal indicating a detection result to the control unit 700. In addition, an ejector rod position detector which detects the position of the ejector rod 230 and an ejector rod speed detector which detects the speed of the ejector rod 230 are not limited to the ejector motor encoder 211, and a general detector can be used.

### (Injection Unit)

Unlike the descriptions of the mold clamping unit 100 or the descriptions of the ejector unit 200, in descriptions of the injection unit 300, a movement direction (left direction in Figs. 1 and 2) of a screw 330 during filling is referred to as a front side, and a movement direction (right direction in Figs. 1 and 2) of the screw 330 during plasticizing is referred to as a rear side.

The injection unit 300 is installed on a slide base 301 which is movable forward or rearward with respect to the frame 900, and is movable forward or rearward with respect to the mold unit 800. The injection unit 300 comes into contact with the mold unit 800, and the cavity space 801 inside the mold unit 800 is filled with the molding material by the injection unit 300. For example, the injection unit 300 includes a cylinder 310, a nozzle 320, the screw 330, a plasticizing motor 340, an injection motor 350, a pressure detector 360, or the like.

The cylinder 310 heats the molding material which is supplied from a supply port 311 to the inner portion of the cylinder 310. For example, the molding material includes a resin or the like. For example, the molding material is formed into pellets and is supplied to the supply port 311 in a solid state. The supply port 311 is formed on a rear portion of the cylinder 310. A cooler 312 such as a water cooling cylinder is provided on an outer periphery of the rear portion of the cylinder 310. A heating unit 313 such as a band heater and the temperature detector 314 are provided on an outer periphery of the cylinder 310 on a front side of the cooler 312.

The cylinder 310 is divided into a plurality of zones in an axial direction (right and left directions in Figs. 1 and 2) of the cylinder 310. The heating unit 313 and the temperature detector 314 are provided in each zone. The control unit 700 controls the heating unit 313 such that a detection temperature of the temperature detector 314 becomes a set temperature for each zone.

The nozzle 320 is provided on the front end portion of the cylinder 310 and presses the mold unit 800. The heating unit 313 and the temperature detector 314 are provided on an outer periphery of the nozzle 320. The control unit 700 controls the heating unit 313 such that a detection temperature of the nozzle 320 becomes a set temperature.

The screw 330 is disposed in the cylinder 310 so as to be rotatable and movable forward or rearward. If the screw 330 rotates, the molding material is fed forward along spiral grooves of the screw 330. The molding material is gradually melted by heat from the cylinder 310 while being fed forward. The liquid molding material is fed to a front portion of the screw 330 and is accumulated in the front portion of the cylinder 310, and thus, the screw 330 moves rearward. Thereafter, if the screw 330 moves forward, the liquid molding material accumulated in front of the screw 330 is injected from the nozzle 320 and the inside of the mold unit 800 is filled with the liquid molding material.

A back flow prevention ring 331 is attached to a front portion of the screw 330 to be movable forward or rearward as a backflow prevention valve which prevents backflow of the molding material from the front side of the screw 330 toward the rear side when the screw 330 is pushed forward.

When the screw 330 moves forward, the backflow prevention ring 331 is pushed toward the rear side by the pressure of the molding material in front of the screw 330 and moves rearward relatively to the screw 330 to a close position (refer to Fig. 2) at which a flow path of the molding material is closed. Accordingly, the molding material accumulated in front of the screw 330 is prevented from flowing toward the rear side.

Meanwhile, when the screw 330 rotates, the backflow prevention ring 331 is pushed toward the front side by the pressure of the molding material fed forward along the spiral grooves of the screw 330 and moves forward relatively to the screw 330 to an open position (refer to Fig. 1) at which the flow path of the molding material is open. Accordingly, the molding material is fed to the front side of the screw 330.

The back flow prevention ring 331 maybe either a co-rotation type ring which rotates together with the screw 330 or a non-co-rotation type ring which does not rotate together with the screw 330.

In addition, the injection unit 300 may include a drive source which moves the backflow prevention ring 331 forward or rearward with respect to the screw 330 between the open position and the close position.

The plasticizing motor 340 rotates the screw 330. A drive source which rotates the screw 330 is not limited to the plasticizing motor 340 and may be a hydraulic pump or the like, for example.

The injection motor 350 moves the screw 330 forward or rearward. A motion conversion mechanism or the like which converts a rotary motion of the injection motor 350 into a linear motion of the screw 330 is provided between the injection motor 350 and the screw 330. For example, the motion conversion mechanism includes a screw shaft and a screw nut which is screwed to the screw shaft. A ball, a roller, or the like may be provided between the screw shaft and the screw nut. A drive source which moves the screw 330 forward or rearward is not limited to the injection motor 350 and may be a hydraulic cylinder, for example.

The pressure detector 360 detects a force transmitted between the injection motor 350 and the screw 330. The detected force is converted into a pressure by the control unit 700. The pressure detector 360 is provided on a transmission path of the force between the injection motor 350 and the screw 330 and detects the force applied to the pressure detector 360.

The pressure detector 360 sends a signal indicating a detection result to the control unit 700. The detection result of the pressure detector 360 is used to control or monitor a pressure received by the screw 330 from the molding material, a back pressure with respect to the screw 330, a pressure applied from the screw 330 to the molding material, or the like.

The injection unit 300 performs a plasticizing process, a holding pressure process, a filling process, or the like under the control of the control unit 700.

In the plasticizing process, the plasticizing motor 340 is driven to rotate the screw 330 at a set rotational speed and the molding material is fed forward along the spiral grooves of the screw 330 by the screw 330. According to this, the molding material is gradually melted. The screw 330 moves rearward as the liquid molding material is fed to the front side of the screw 330 and is accumulated in front of the cylinder 310. For example, the rotational speed of the screw 330 is detected using a plasticizing motor encoder 341. The plasticizing motor encoder 341 detects the rotation of the plasticizing motor 340 and sends a signal indicating a detection result to the control unit 700. In addition, a screw rotational speed detector which detects the rotational speed of the screw 330 is not limited to the plasticizing motor encoder 341, and a general detector may be used.

In the plasticizing process, in order to restrict an abrupt rearward movement of the screw 330, the injection motor 350 may be driven so as to apply a set back pressure to the screw 330. For example, the back pressure with respect to the screw 330 is detected using the pressure detector 360. The pressure detector 360 sends a signal indicating a detection result to the control unit 700. If the screw 330 moves rearward to a plasticizing completion position and a predetermined amount of the molding materials is accumulated in front of the screw 330, the plasticizing process is completed.

In the filling process, the injection motor 350 is driven to move the screw 330 forward at a set speed, and the cavity space 801 inside the mold unit 800 is filled with the liquid molding material accumulated in front of the screw 330. For example, a position or speed of the screw 330 is detected using an injection motor encoder 351. The injection motor encoder 351 detects the rotation of the injection motor 350 and sends a signal indicating a detection result to the control unit 700. If the position of the screw 330 reaches a set position, switching (so called V/P switching) from the filling process to the holding pressure process is performed. The position at which the V/P switching is performed is also referred to a V/P switching position. The set speed of the screw 330 may be changed according to the position of the screw 330, the time, or the like.

In addition, in the filling process, after the position of the screw 330 reaches the set position, the screw 330 may be temporarily stopped at the set position, and thereafter, the V/P switching may be performed. Immediately before the V/P switching, instead of the screw 330 being stopped, the screw 330 may move forward or may move rearward at a very slow speed. Moreover, a screw position detector which detects the position of the screw 330 and a screw movement speed detector which detects the movement speed of the screw 330 are not limited to the injection motor encoder 351, and a general detector can be used.

In the holding pressure process, the injection motor 350 is driven to push the screw 330 forward, a pressure (hereinafter, also referred to as a "holding pressure") of the molding material on a front end portion of the screw 330 is held at a set pressure, and the molding material remaining inside the cylinder 310 is pressed toward the mold unit 800. Insufficient molding materials can be replenished by cooling shrinkage in the mold unit 800. For example, the holding pressure is detected using the pressure detector 360. The pressure detector 360 sends a signal indicating a detection result to the control unit 700. A set value of the holding pressure may be changed according to an elapsed time from the starting of the holding pressure process, or the like.

In the holding pressure process, the molding material inside the cavity space 801 in the mold unit 800 is gradually cooled, and when the holding pressure process is completed, an inlet of the cavity space 801 is closed by a solidified molding material. This state is referred to a gate seal and a backflow of the molding material from the cavity space 801 is prevented. A cooling process starts after the holding pressure process. In the cooling process, solidification of the molding material in the cavity space 801 is performed. In order to shorten a molding cycle time, the plasticizing process may be performed during the cooling process.

In addition, the injection unit 300 of the present embodiment is an inline and screw type injection unit. However, the injection unit 300 may be a preplasticizing type injection unit. The preplasticizing type injection unit supplies the melted molding material inside a plasticizing cylinder to an injection cylinder and injects the molding material from the injection cylinder into the mold unit. A screw is disposed to be rotatable or rotatable and movable forward or rearward in the plasticizing cylinder and a plunger is disposed to be movable forward or rearward in the injection cylinder.

In addition, the injection unit 300 of the present embodiment is a horizontal type injection unit in which the axial direction of the cylinder 310 is the horizontal direction. However, the injection unit 300 may be a vertical type injection unit in which the axial direction of the cylinder 310 is the upward-downward direction . The mold clamping unit combined with the vertical type injection unit 300 may be a vertical type mold clamping unit or a horizontal type mold injection unit. Similarly, the mold clamping unit combined with the horizontal type injection unit 300 may be a horizontal type mold clamping unit or a vertical type mold clamping unit.

### (Movement Unit)

Similarly to the descriptions of the injection unit 300, in descriptions of the movement unit 400, the movement direction (left direction in Figs. 1 and 2) of the screw 330 during filling is referred to as a front side, and the movement direction (right direction in Figs. 1 and 2) of the screw 330 during the plasticizing is referred to as a rear side.

The movement unit 400 moves the injection unit 300 forward or rearward with respect to the mold unit 800. In addition, the movement unit 400 presses the nozzle 320 to the mold unit 800 to generate a nozzle touch pressure. The movement unit 400 includes a hydraulic pump 410, a motor 420 which is a drive source, a hydraulic cylinder 430 which is a hydraulic actuator, or the like.

The hydraulic pump 410 includes a first port 411 and a second port 412. The hydraulic pump 410 is a pump which can rotate in both directions and switches a rotation direction of the motor 420. Accordingly, a working liquid (for example, oil) is sucked from any one of first port 411 and the second port 412 and is discharged from the other, and thus, a liquid pressure is generated. In addition, the hydraulic pump 410 sucks the working liquid from a tank and can discharge the working liquid from any one of the first port 411 and the second port 412.

The motor 420 operates the hydraulic pump 410. The motor 420 drives the hydraulic pump 410 in the rotation direction corresponding to a signal from the control unit 700 and by the rotation torque corresponding to the control signal from the control unit 700. The motor 420 may be an electric motor or an electric servo motor.

The hydraulic cylinder 430 includes a cylinder body 431, a piston 432, and a piston rod 433. The cylinder body 431 is fixed to the injection unit 300. The piston 432 divides the inside of the cylinder body 431 into a front chamber 435 which is a first chamber and a rear chamber 436 which is a second chamber. The piston rod 433 is fixed to the stationary platen 110.

The front chamber 435 of the hydraulic cylinder 430 is connected to the first port 411 of the hydraulic pump 410 via a first flow path 401. The working liquid discharged from the first port 411 is supplied to the front chamber 435 via the first flow path 401, and thus, the injection unit 300 is pushed forward. The injection unit 300 moves forward, and thus, the nozzle 320 is pressed to the stationary mold 810. The front chamber 435 functions as a pressure chamber which generates the nozzle touch pressure of the nozzle 320 by the pressure of the working liquid supplied from the hydraulic pump 410.

Meanwhile, the rear chamber 436 of the hydraulic cylinder 430 is connected to the second port 412 of the hydraulic pump 410 via a second flow path 402. The working liquid discharged from the second port 412 is supplied to the rear chamber 436 of the hydraulic cylinder 430 via the second flow path 402, and thus, the injection unit 300 is pushed rearward. The injection unit 300 moves rearward and thus, the nozzle 320 is separated from the stationary mold 810.

In addition, in the present embodiment, the movement unit 400 includes the hydraulic cylinder 430. However, the present invention is not limited to this. For example, instead of the hydraulic cylinder 430, an electric motor and a motion conversion mechanism which converts a rotary motion of the electric motor into a linear motion of the injection unit 300 may be used.

### (Control unit)

For example, the control unit 700 includes a computer, and as shown in Figs. 1 and 2, the control unit 700 includes a Central Processing Unit (CPU) 701, a recording medium 702 such as a memory, an input interface 703, and an output interface 704 . The control unit 700 performs various controls by causing the CPU 701 to execute a program stored in the recording medium 702. In addition, the control unit 700 receives a signal from the outside through the input interface 703 and transmits a signal to the outside through the output interface 704.

The control unit 700 repeatedly performs the mold closing process, the mold clamping process, the mold opening process, or the like to repeatedly manufacture the molding product. In addition, the control unit 700 performs the plasticizing process, the filling process, the holding pressure process, or the like between the mold clamping processes. A series of operations to obtain the molding product, for example, an operation from the start of the plasticizing process to the start of the next plasticizing process is also referred to as a "shot" or a "molding cycle". In addition, a time required for once shot is also referred to as a "molding cycle time".

For example, the once mold cycle includes the plasticizing process, the mold closing process, the mold clamping process, the filling process, the holding pressure process, the cooling process, the mold opening process, and the ejection process in this order. Here, this order is an order of the start of each process. The filling process, the holding pressure process, and the cooling process are performed between the start of the mold clamping process to the end of the mold clamping process. The end of the mold clamping process coincides with the start of the mold opening process. In addition, in order to shorten the molding cycle time, the plurality of processes may be simultaneously performed. For example, the plasticizing process maybe performed during the cooling process of the previous molding cycle, and in this case, the mold closing process may be performed at an initial stage of the molding cycle. In addition, the filling process may start during the mold closing process. Moreover, the ejection process may be started during the mold opening process. In a case where an on/off valve for opening or closing a flow path of the nozzle 320, the mold opening process may be started during the plasticizing process. Accordingly, even when the molding opening process is started during the plasticizing process, the molding material does not leak from the nozzle 320 if the on/off valve closes the flow path of the nozzle 320.

The control unit 700 is connected to an operation unit 750 or a display unit 760. The operation unit 750 receives an input operation from a user and outputs a signal corresponding to the input operation to the control unit 700. The display unit 760 displays an operation screen corresponding to the input operation in the operation unit 750, under the control of the control unit 700.

The operation screen is used for the setting of the injection molding machine 10 or the like. A plurality of operation screens are provided, and thus, are displayed to be switched or to overlap each other. The user operates the operation unit 750 while viewing the operation screen displayed on the display unit 760 to perform the setting (including an input of a set value) of the injection molding machine 10 or the like.

For example, the operation unit 750 and the display unit 760 may be configured of a touch panel to be integrated with each other. Inaddition, in the present embodiment, the operation unit 750 and the display unit 760 are integrated with each other. However, the operation unit 750 and the display unit 760 may be independently provided. In addition, a plurality of operation units 750 may be provided.

### <Scattering Prevention Mechanism of Lubricant in Motion Conversion Mechanism 170>

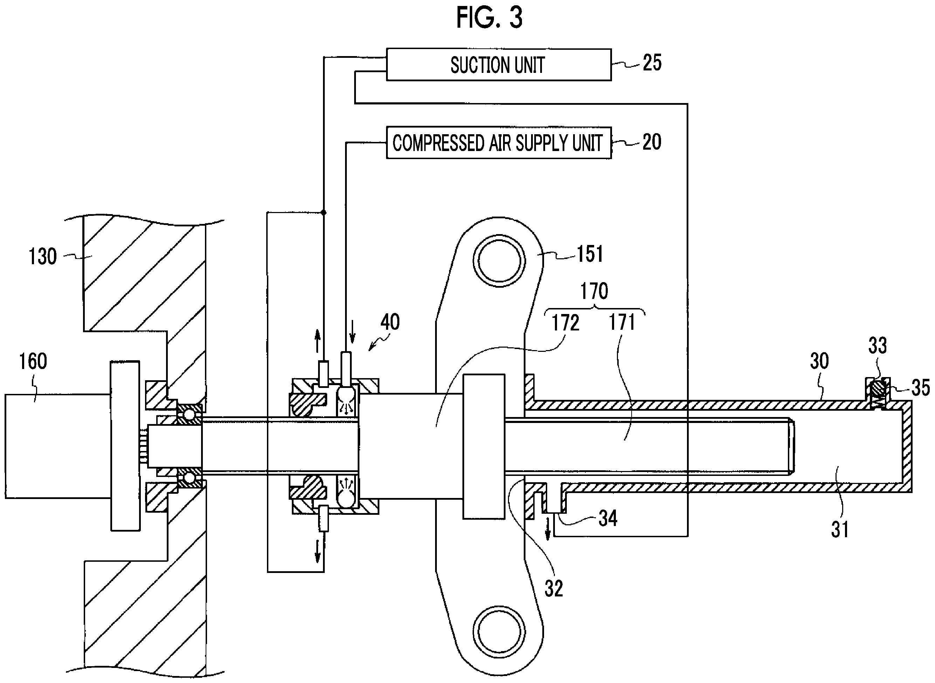

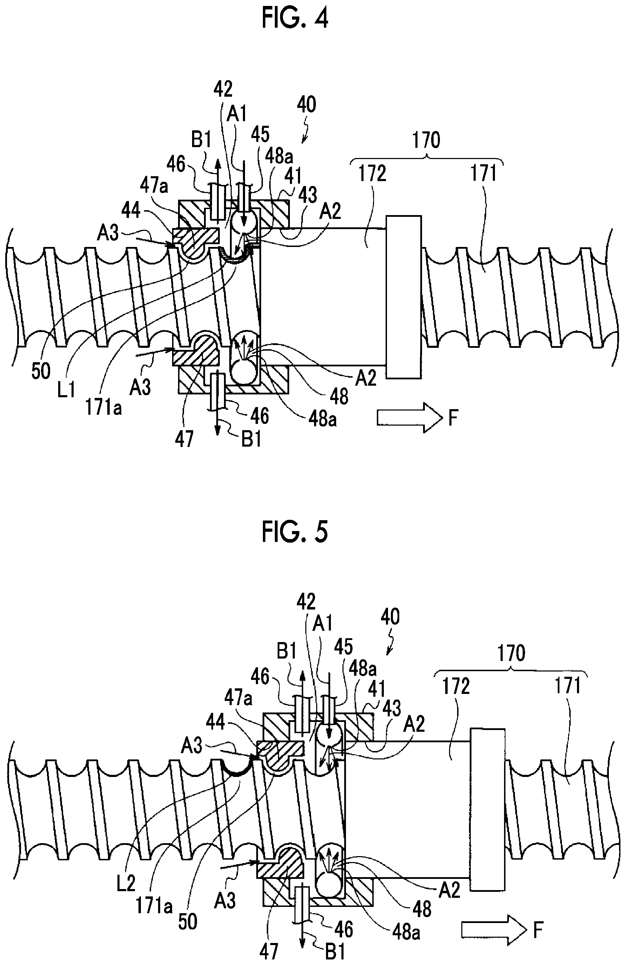

Next, a lubrication of the motion conversion mechanism 170 which drives the crosshead 151 will be described with reference to Figs. 3 to 5. Fig. 3 is a schematic sectional view explaining a configuration around the motion conversion mechanism 170 of the injection molding machine 10 according to the first embodiment. Fig. 4 is a sectional view explaining a configuration of a nut cover 40. Fig. 5 is a sectional view explaining the configuration of the nut cover 40 in a state where the toggle support 130 moves forward.

As shown in Fig. 3, a screw shaft 171 is attached to the toggle support 130 to be rotatable and movable forward or rearward with respect to the toggle support 130 and is rotated by the mold clamping motor 160. In addition, a screw nut 172 is attached to the crosshead 151. Moreover, the crosshead 151 is one of components of the toggle mechanism 150 of the mold clamping unit 100 shown in Fig. 1. According to this configuration, the mold clamping motor 160 is rotated, and thus, the crosshead 151 can move forward or rearward. In addition, in the following descriptions, the motion conversion mechanism 170 including the screw shaft 171 and the screw nut 172 is a ball screw in which balls are interposed between the screw shaft 171 and the screw nut 172.

Moreover, although not shown, the screw nut 172 includes a supply hole through the lubricant is supplied to the screw shaft 171 inserted into the screw nut 172, a supply hole through which the lubricant is supplied to the balls in the screw nut 172, or the like. The lubricant is supplied from the supply holes, and thus, the screw shaft 171 is lubricated.

In addition, as shown in Fig. 3, a scattering prevention mechanism is provided, which prevents the lubricant supplied to the motion conversion mechanism 170 from being scattered or the like. The scattering prevention mechanism includes a compressed air supply unit 20, a suction unit 25, a screw shaft cover 30, and a nut cover 40.

The compressed air supply unit 20 includes a compressor or the like and supplies compressed air to a supply path 45 of the nut cover 40 described later.

The suction unit 25 includes a vacuum pump or the like, is connected to an intake hole 33 of a screw shaft cover 30 described later, sucks (evacuates) air from an internal space 31 of the screw shaft cover 30, is connected to a collection path 46 of a nut cover 40 described later, and sucks (evacuates) air from an internal space 42 of the nut cover 40. In the suction unit 25, suction from an exhaust hole 34 of the screw shaft cover 30 and suction from the collection path 46 of the nut cover 40 can be performed individually or simultaneously. Moreover, the suction unit 25 may include a separation portion which separates the lubricant from the air so as to separate the lubricant from the inflowing air and collect the lubricant.

The screw shaft cover 30 has a bottomed tubular shape including the internal space 31 and an opening portion 32, and the screw shaft 171 protruding from the crosshead 151 is inserted into the screw shaft cover 30 from the opening portion 32 and is accommodated in the internal space 31. In addition, the screw shaft cover 30 is fixed to the crosshead 151 on the opening portion 32 side, and the opening portion 32 is closed by the crosshead 151. Moreover, the tubular shape may be a cylindrical shape or a square tubular shape.

Moreover, the intake hole 33 which communicates with an external space and the internal space 31 is provided on a distal end side of the screw shaft cover 30. A check valve 35 is provided in the intake hole 33, the check valve 35 is opened if a pressure of the internal space 31 is more negative than the pressure of the external space. Therefore, the air can flow from the external space into the internal space 31. However, the air cannot flow from the internal space 31 to the external space. In addition, the exhaust hole 34 which communicates with the internal space 31 is provided in the screw shaft cover 30, and the exhaust hole 34 is connected to the suction unit 25.

Moreover, in Fig. 3, the intake hole 33 and the exhaust hole 34 are provided in an upward-downward direction of the screw shaft cover 30. However, in order to avoid interferences between the intake hole 33 and the exhaust holes 34, and the links 152, 153, and 154 of the toggle mechanism 150, it is preferable that the intake hole 33 and the exhaust holes 34 are disposed on an operation side (-Y direction side in Fig. 1) and a counter operation side (+Y direction in Fig. 1).

As shown in Fig. 4, the nut cover 40 includes a cover body 41, a labyrinth seal 47, and a ring tube 48.

The cover body 41 has a tubular shape which includes an internal space 42 and opening portions 43 and 44, and the screw shaft 171 is inserted into the cover body 41. In addition, the cover body 41 is fixed to the screw nut 172 on the opening portion 43 side and the opening portion 43 is closed by the screw nut 172. Moreover, the tubular shape may be a cylindrical shape or a square tubular shape.

In addition, the cover body 41 includes the labyrinth seal 47 in the opening portion 44. The labyrinth seal 47 is formed such that an outer diameter portion thereof is fitted to the opening portion 44, and an inner diameter portion thereof has a spiral convex portion 47a conforming to a shape of a screw groove (rolling surface) of the screw shaft 171. Moreover, a slight gap 50 is formed between the screw shaft 171 and the labyrinth seal 47 such that a torque does not increase due to friction or heat is not generated. In addition, if the gap 50 is widened, it is necessary to increase output of the suction unit 25 such that a pressure of the internal space 42 becomes a negative pressure, and thus, it is preferable that the gap 50 is narrow.

In addition, the supply path 45 and the collection path 46 are provided in the cover body 41. The supply path 45 is formed to penetrate the cover body 41, and the compressed air from the compressed air supply unit 20 is supplied to the ring tube 48 disposed in the internal space 42 through the supply path 45.

The ring tube 48 is a ring-shaped pipe which is disposed on an inner periphery of the cover body 41 and the screw shaft 171 is inserted into the ring tube 48. In addition, a hole is formed on an inner peripheral portion of the ring tube 48 and becomes a nozzle 48a which discharges the compressed air toward the screw shaft 171. In addition, a plurality of holes serving as the nozzles 48a are provided radially when viewed in an axial direction of the screw shaft 171.

The collection path 46 is formed to penetrate the cover body 41 and is a flow path used when the air in the internal space 42 is sucked by the suction unit 25. Moreover, in the example shown in Fig. 4, two collection paths 46 are provided. However, one collection path 46 or three or more collection paths 46 may be provided.

### <Operation of Scattering Prevention Mechanism>

Next, an operation of the scattering prevention mechanism will be described.

### (Screw Shaft Cover 30)

When the crosshead 151 moves rearward (moves in a direction approaching the toggle support 130), a portion of the screw shaft 171 disposed inside the screw nut 172 enters the internal space 31 of the screw shaft cover 30. The lubricant adheres to a surface of the screw shaft 171 entering the internal space 31. Here, the screw shaft 171 protruding from the crosshead 151 is covered with the screw shaft cover 30, and thus, the lubricant dripping from the screw shaft 171 or the lubricant scattered by acentrifugal force generated by a rotation of the screw shaft 171 is prevented from flowing the internal space 31 of the screw shaft cover 30 to the external space.

In addition, as the suction unit 25 is operated, the pressure of the internal space 31 become a negative pressure . Accordingly, the air from the external space flows into the internal space 31 from the intake hole 33 by opening the check valve 35 and flows from the exhaust hole 34 to the suction unit 25. The lubricant in the internal space 31 is collected by the suction unit 25 according to the flow of the air. In addition, in a state where the check valve 35 is open, a flow of the air from the external space to the internal space 31 is generated in the intake hole 33, and thus, mist of the lubricant in the internal space 31 is prevented from flowing from the intake hole 33 to the external space. Moreover, when the suction unit 25 stops, the mist of the lubricant is prevented from flowing the internal space 31 to the external space by closing the check valve 35.

### (Nut Cover 40)

As shown in Fig. 4, when the crosshead 151 moves forward (moves in a direction away from the toggle support 130) in a direction shown by an arrow F, a portion 171a of the screw shaft 171 disposed inside the screw nut 172 enters the internal space 42 of the nut cover 40. A lubricant L1 adheres to a surface of the portion 171a of the screw shaft 171 entering the internal space 42. Here, the compressed air supply unit 20 is operated, the compressed air is supplied from the supply path 45 to the ring tube 48 as shown by an arrow A1, and the compressed air is blown to the surface of the screw shaft 171 from the nozzles 48a of the ring tube 48 as shown by arrows A2. Accordingly, the lubricant adhering to the surface of the screw shaft 171 is blown off. Moreover, the suction unit 25 is operated, the air is sucked from the internal space 42 to the collection path 46 as shown by an arrow B1, and thus, the lubricant blown off by the compressed air or the mist of the lubricant is collected by the suction unit 25. Accordingly, as shown in Fig. 5, in a state where the crosshead 151 further moves forward and the screw shaft 171 is exposed to the external space from the inside of the nut cover 40, it is possible to sufficiently decrease a lubricant L2 adhering to the surface of the portion 171a of the screw shaft 171 exposed to the external space. Therefore, it is possible to sufficiently decrease an amount of the lubricant which is scattered from the screw shaft 171 exposed to the external space to the external space.

In addition, a suction amount of the air by the suction unit 25 shown by the arrow B1 is higher than a supply amount of the compressed air by the compressed air supply unit 20 shown by the arrow A1. Accordingly, the pressure of the internal space 42 becomes a negative pressure with respect to the external space, and thus, orientation of air flowing from the external space to the internal space 42 is generated in the gap 50 between the labyrinth seal 47 and the screw shaft 171 as shown by arrows A3. Therefore, it is possible to prevent the mist of the lubricant from flowing from the gap 50 of the labyrinth seal 47 to the external space.

In addition, when viewed in the axial direction of the screw shaft 171, the supply path 45 and the nozzle 48a for blowing the compressed air are disposed on the side of the opening portion 43 which is fixed to the screw nut 172, and the collection path 46 is disposed on the side of the opening portion 44 in which the labyrinth seal 47 is disposed. That is, the labyrinth seal 47, the collection path 46, the supply path 45 (nozzle 48a), and the fixed side of the screw nut 172 are disposed in this order. Accordingly, when the crosshead 151 moves forward, first, the supply path 45 (nozzle 48a) approaches the screw shaft 171 to which the lubricant adheres, the lubricant is blown off by the compressed air. In addition, the crosshead 151 further moves forward, the collection path 46 moves to a position at which the supply path 45 (nozzle 48a) is positioned, and thus, the blown-off lubricant can be effectively collected.

Hereinbefore, according to the injection molding machine 10 of the first embodiment, the scattering prevention mechanism of the lubricant is provided in the motion conversion mechanism 170, and thus, it is possible to prevent the lubricant or the mist of the lubricant from flowing from the motion conversion mechanism 170 to the external space.

In addition, in the screw shaft cover 30, the suction of the air of the internal space 31 may be continuously performed or intermittently performed by the suction unit 25.

Moreover, in the nut cover 40, the supply of the compressed air by the compressed air supply unit 20 and the suction of the air of the internal space 42 by the suction unit 25 are continuously performed. However, the present invention is not limited to this. For example, when the crosshead 151 moves forward (while the mold is closed), that is, when the crosshead 151 moves in a direction in which a length of the screw shaft 171 exposed from the opening portion 44 of the nut cover 40 increases, by supplying the compressed air to the supply path 45, the lubricant adhering to the screw shaft 171 is blown off and collected. Meanwhile, when the crosshead 151 moves rearward (while the mold is open), that is, when the crosshead 151 moves in a direction in which a length of the screw shaft 171 exposed from the opening portion 44 of the nut cover 40 decreases, the supply of the compressed air to the supply path 45 maybe stopped. Accordingly, an outflow of the lubricant to the external space is prevented, and a power consumption of the compressed air supply unit 20 can decrease. In addition, in order to prevent an outflow of the mist of the lubricant from the gap 50, it is preferable that the suction unit 25 is operated even when the crosshead 151 moves forward or rearward.

In addition, the screw shaft cover 30 is fixed to the crosshead 151 and the nut cover 40 is fixed to the screw nut 172. However, the nut cover 40 may be fixed to one end side of the screw nut 172 and the screw shaft cover 30 may be fixed to the other end side of the screw nut 172.

Moreover, the nut cover 40 is provided on the toggle support 130 side and the screw shaft cover 30 is provided on a side opposite to the toggle support 130 side when viewed from the screw nut 172. However, the present invention is not limited to this, and a positional relationship between the screw shaft cover 30 and the nut cover 40 may be reversed. In a case where the screw shaft cover is provided on the toggle support 130 side, the screw shaft cover may have a telescopic configuration such as a bellows, one side of the screw shaft cover may be fixed to the screw nut 172, and the other side thereof may be fixed to the toggle support 130.

### <<Second Embodiment>>

Next, an injection molding machine according to a second embodiment will be described. Compared to the injection molding machine according to the first embodiment, in the injection molding machine according to the second embodiment, a configuration of a scattering prevention mechanism is different.

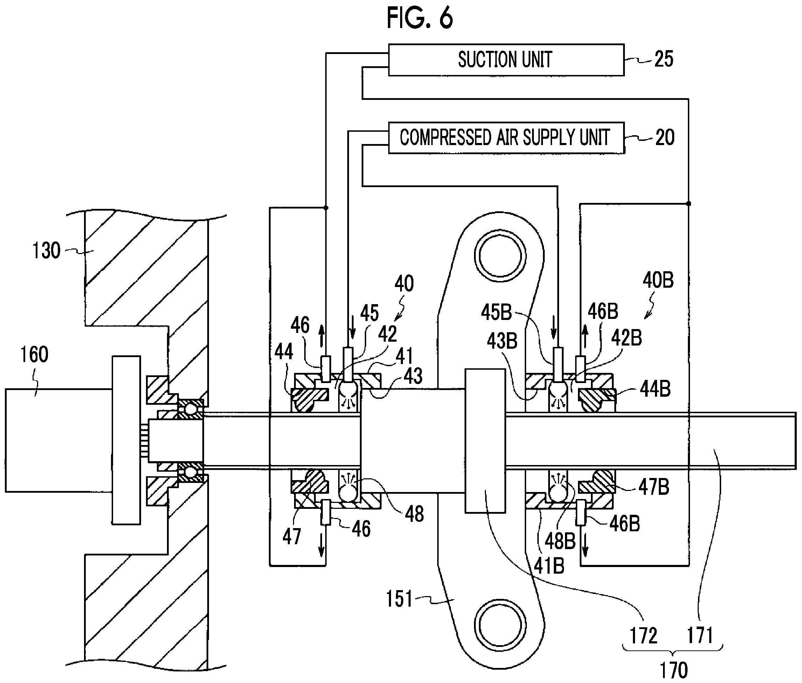

Fig. 6 is a schematic sectional view explaining a configuration around a motion conversion mechanism 170 of the injection molding machine according to the second embodiment. In the first embodiment, as shown in Fig. 3, the screw shaft cover 30 and the nut cover 40 are the configurations for preventing the scattering of the lubricant. Meanwhile, in the second embodiment, as shown in Fig. 6, a nut cover 40 and a nut cover 40B are the configurations for preventing the scattering of the lubricant.

The nut cover 40B includes a cover body 41B, a labyrinth seal 47B, and a ring tube 48B. The cover body 41B has a tubular shape which includes an internal space 42B and opening portions 43B and 44B, and the screw shaft 171 is inserted into the cover body41B. Inaddition, the cover body 41B is fixed to the crosshead 151 on the opening portion 43B side and the opening portion 43B is closed by the crosshead 151. Moreover, the tubular shape may be a cylindrical shape or a square tubular shape. Moreover, a supply path 45B which is connected to the compressed air supply unit 20 and a collection path 46B which is connected to the suction unit 25 are provided in the cover body 41B. Other configurations are similar to those of the nut cover 40, and thus, overlapping descriptions are omitted.

Moreover, the compressed air supply unit 20 can perform the supply of the compressed air to the supply path 45 of the nut cover 40 and a supply of the compressed air to the supply path 45B of the nut cover 40B individually or simultaneously. In addition, the suction unit 25 can perform the suction of the collection path 46 of the nut cover 40 and the suction of the collection path 46B of the nut cover 40B individually or simultaneously.

Hereinbefore, similarly to the injection molding machine of the first embodiment, according to the injection molding machine of the second embodiment, it is possible to prevent the lubricant or the mist of the lubricant from flowing from the motion conversion mechanism 170 to the external space. Moreover, in the scattering prevention mechanism of the first embodiment, an axial length capable of receiving the screw shaft 171 inside the screw shaft cover 30 is required even in a state where the screw nut 172 moves rearward, and the distal end of the screw shaft cover 30 protrude forward from the distal end of the screw shaft 171 in a state where the screw nut 172 moves forward. Meanwhile, in the scattering prevention mechanism of the second embodiment, the nut cover 40B does not move forward from the distal end of the screw shaft 171, and thus, it is possible to design the injection molding machine 10 in a compact manner.

Moreover, in the nut covers 40 and 40B, the supply of the compressed air by the compressed air supply unit 20 and the suction of the air of the internal spaces 42 and 42B by the suction unit 25 are continuously performed. However, the present invention is not limited to this.

For example, when the crosshead 151 moves forward (while the mold is closed), the compressed air supply unit 20 may supply the compressed air to the supply path 45 of the nut cover 40 and may stop the supply of the compressed air to the supply path 45B of the nut cover 40B. That is, when the crosshead 151 moves in the direction in which the length of the screw shaft 171 exposed from the opening portion 44 of the nut cover 40 increases, by supplying the compressed air to the supply path 45, the lubricant adhering to the screw shaft 171 is blown off and collected. In addition, when the crosshead 151 moves in the direction in which the length of the screw shaft 171 exposed from the opening portion 44B of the nut cover 40B decreases, the supply of the compressed air to the supply path 45B may be stopped.

Meanwhile, when the crosshead 151 moves rearward (while the mold is opened), the compressed air supply unit 20 may supply the compressed air to the supply path 45B of the nut cover 40B and may stop the supply of the compressed air to the supply path 45 of the nut cover 40. That is, when the crosshead 151 moves in the direction in which the length of the screw shaft 171 exposed from the opening portion 44B of the nut cover 40B increases, by supplying the compressed air to the supply path 45B, the lubricant adhering to the screw shaft 171 is blown off and collected. In addition, when the crosshead 151 moves in the direction in which the length of the screw shaft 171 exposed from the opening portion 44 of the nut cover 40 decreases, the supply of the compressed air to the supply path 45 may be stopped.

Accordingly, an outflow of the lubricant to the external space is prevented, and the power consumption of the compressed air supply unit 20 can decrease. In addition, in order to prevent the outflow of the mist of the lubricant from the gaps between the labyrinth seals 47 and 47A and the screw shaft 171, when the crosshead 151 move forward or rearward, it is preferable that the suction unit 25 performs suction from the collection path 46 of the nut cover 40 and the collection path 46B of the nut cover 40B.

### <Modification Example>

In addition, the labyrinth seal 47 which is the seal member which is in non-contact with the screw shaft 171 is provided in the opening portion 44 of the nut cover 40. However, the present invention is not limited to this, and the labyrinth seal 47 may be a seal member which is in contact with the screw shaft 171. Also in the case, it is possible to prevent the outflow of the mist of the lubricant.

In addition, the lubricant is supplied to the screw shaft 171 from the supply hole (not shown) provided in the screw nut 172. However, the present invention is not limited to this . The misty lubricant may be blown to the screw shaft 171 together with the compressed air. Accordingly, it is possible to form a thin layer of the lubricant on the surface of the screw shaft 171 and it is possible to decrease an amount of the used lubricant. Moreover, also in this configuration, the pressure of the internal space 42 is more negative than the pressure of the external space, and thus, it is possible to prevent the mist of the lubricant from flowing to the external space.

Moreover, the scattering prevention mechanism of the motion conversion mechanism 170 which drives the crosshead 151 of the mold clamping unit 100 is described as an example. However, the scattering prevention mechanism may be applied to other motion conversion mechanisms. For example, the scattering prevention mechanism may be applied to the motion conversion mechanism 220 which is driven by the ejector motor 210 in the ejector unit 200.

Hereinbefore, the embodiments of the injection molding machine or the like are described. However, the present invention is not limited to the above-described embodiments or the like, and various modifications and improvements can be made within the scope of the present invention described in claims.

### Brief Description of the Reference Symbols

100: mold clamping unit
151: crosshead (drive member)
160: mold clamping motor (motor)
170: motion conversion mechanism
171: screw shaft
172: screw nut
200: ejector unit (injection unit)
210: ejector motor
220: motion conversion mechanism
20: compressed air supply unit
25: suction unit
30: screw shaft cover (second cover)
31: internal space
32: opening portion
33: intake hole (intake section)
34: exhaust hole (second collection unit)
35: check valve
40, 40B: nut cover (first cover)
41, 41B: cover body
42, 42B: internal space
43, 44, 43B, 44B: opening portion
45, 45B: supply path (supply unit)
46, 46B: collection path (first collection unit)
47, 47B: labyrinth seal (seal member)
47a: convex portion
48, 48B: ring tube
48a: nozzle (supply unit)
L1, L2: lubricant
50: gap

## Claims

1. An injection molding machine (10) comprising:
a motion conversion mechanism (170) which is used in at least one of an injection unit (200) and a mold clamping unit (100) and has a screw shaft (171) and a screw nut (172) lubricated by a lubricant (L1, L2); and
a first cover (40) into which the screw shaft (171) is inserted and which is fixed to one end side of the screw nut (172),
**characterized in that**
the first cover (40) includes
a cover body (41),
a supply path (45) through which air compressed by a compressed air supply unit (20) is blown to the screw shaft (171) in an internal space (42) of the cover body (41),
a first collection path (46) connected to a suction unit (25) through which the lubricant (L1, L2) is collected in the internal space (42) of the cover body (41), and
a seal member (47) which seals a portion between the cover body (41) and the screw shaft (171).

2. The injection molding machine (10) according to claim 1,
wherein a gap (50) through which air flows is provided between the seal member (47) and the screw shaft (171), and
wherein the suction unit (25) sucks air from the internal space (42) of the cover body (41) through the first collection path (46).

3. The injection molding machine (10) according to claim 1 or 2,
wherein one end side of the cover body (41) is fixed to the screw nut (172) and a portion between the other end side thereof and the screw shaft (171) is sealed by the seal member (47),
wherein the supply path (45) is disposed on the screw nut (172) side, and
wherein the first collection path (46) is disposed on the seal member (47) side.

4. The injection molding machine (10) according to any one of claims 1 to 3, further comprising:
a second cover (30) which covers the screw shaft (171) on the other end side of the screw nut (172); and
a second collection path (34) connected to the suction unit (25) through which a lubricant (L1, L2) is collected in an internal space (31) of the second cover (30).

5. The injection molding machine (10) according to claim 4, further comprising:
an intake section (33) which communicates with the internal space (31) of the second cover (30) and an external space; and
a check valve (35) which is provided in the intake section (33) and is opened such that a pressure of the internal space (31) of the second cover (30) is lower than a pressure of the external space.

6. The injection molding machine according to any one of claims 1 to 3,
wherein the first cover (40) is provided on the other end side of the screw nut (172).

7. The injection molding machine according to any one of claims 1 to 6,
wherein the motion conversion mechanism (170) is used in the mold clamping unit (100), and
wherein the screw nut (172) is fixed to a crosshead (151) .

## Patentansprüche

1. Spritzgießmaschine (10), umfassend:
einen Bewegungsumwandlungsmechanismus (170), der in einer Einspritzeinheit (200) und/oder einer Formschließ/- klemmeinheit (100) verwendet wird und eine Spindelwelle (171) und eine Spindelmutter (172) aufweist, die durch ein Schmiermittel (L1, L2) geschmiert sind; und
eine erste Abdeckung (40), in welche die Spindelwelle (171) eingesetzt ist und welche an einem Ende einer Seite der Spindelmutter (172) befestigt ist,
**dadurch gekennzeichnet, dass**
die erste Abdeckung (40) aufweist
einen Abdeckungskörper (41),
einen Zuführweg (45), durch welchen Luft, die durch eine Druckluft-Zuführeinheit (20) verdichtet wird, zu der Spindelwelle (171) in einem Innenraum (42) des Abdeckungskörpers (41) geblasen wird,
einen ersten Sammelweg (46), der mit einer Saugeinheit (25) verbunden ist, durch welchen das Schmiermittel (L1, L2) in dem Innenraum (42) des Abdeckungskörpers (41) gesammelt wird, und
ein Dichtungselement (47), das einen Abschnitt zwischen dem Abdeckungskörper (41) und der Spindelwelle (171) abdichtet.

2. Spritzgießmaschine (10) nach Anspruch 1,
wobei ein Spalt (50), durch welchen Luft strömt, zwischen dem Dichtungselement (47) und der Spindelwelle (171) vorgesehen ist, und
wobei die Saugeinheit (25) Luft von dem Innenraum (42) des Abdeckungskörpers (41) durch den ersten Sammelweg (46) ansaugt.

3. Spritzgießmaschine (10) nach Anspruch 1 oder 2,
wobei ein Ende einer Seite des Abdeckungskörpers (41) an der Spindelmutter (172) befestigt ist und ein Abschnitt zwischen dem Ende der anderen Seite davon und der Spindelwelle (171) durch das Dichtungselement (47) abgedichtet ist,
wobei der Zuführweg (45) auf der Seite der Spindelmutter (172) angeordnet ist, und
wobei der erste Sammelweg (46) auf der Seite des Dichtungselements (47) angeordnet ist.

4. Spritzgießmaschine (10) nach einem der Ansprüche 1 bis 3, ferner umfassend:
eine zweite Abdeckung (30), welche die Spindelwelle (171) an dem Ende der anderen Seite der Spindelmutter (172) abdeckt; und
einen zweiten Sammelweg (34), der mit der Saugeinheit (25) verbunden ist, durch welchen ein Schmiermittel (L1, L2) in einem Innenraum (31) der zweiten Abdeckung (30) gesammelt wird.

5. Spritzgießmaschine (10) nach Anspruch 4, ferner umfassend:
einen Einlassabschnitt (33), der mit dem Innenraum (31) der zweiten Abdeckung (30) und einem Außenraum verbunden ist; und
ein Sperrventil (35), das in dem Einlassabschnitt (33) vorgesehen ist und geöffnet wird, sodass ein Druck des Innenraums (31) der zweiten Abdeckung (30) niedriger ist als ein Druck des Außenraums.

6. Spritzgießmaschine nach einem der Ansprüche 1 bis 3,
wobei die erste Abdeckung (40) an dem Ende der anderen Seite der Spindelmutter (172) vorgesehen ist.

7. Spritzgießmaschine nach einem der Ansprüche 1 bis 6,
wobei der Bewegungsumwandlungsmechanismus (170) in der Formschließ/-klemmeinheit (100) verwendet wird, und
wobei die Spindelmutter (172) an einem Kreuzkopf (151) befestigt ist.

## Revendications

1. Une machine de moulage par injection (10) comprenant :
un mécanisme de conversion de mouvement (170) qui est utilisé dans au moins une unité d'injection (200) et une unité de serrage de moule (100) et qui comprend une tige de vis (171) et un écrou de vis (172) lubrifiés par un lubrifiant (L1, L2) ; et
un premier couvercle (40) dans lequel la tige de vis (171) est insérée et qui est fixé à un côté d'extrémité de l'écrou de vis (172),
**caractérisé en ce que**
le premier couvercle (40) comprend
un corps de couvercle (41),
un trajet d'alimentation (45) à travers lequel de l'air comprimé par une unité d'alimentation en air comprimé (20) est soufflé vers la tige de vis (171) dans un espace interne (42) du corps de couvercle (41),
un premier trajet de collecte (46) relié à une unité d'aspiration (25) à travers laquelle le lubrifiant (L1, L2) est collecté dans l'espace interne (42) du corps de couvercle (41) et
un élément d'étanchéité (47) qui étanchéifie une portion entre le corps de couvercle (41) et la tige de vis (171).

2. La machine de moulage par injection (10) selon la revendication 1,
dans laquelle un interstice (50) à travers lequel l'air s'écoule est prévu entre l'élément d'étanchéité (47) et la tige de vis (171) et
dans lequel l'unité d'aspiration (25) aspire l'air de l'espace interne (42) du corps de couvercle (41) à travers le premier trajet de collecte (46).

3. La machine de moulage par injection (10) selon la revendication 1 ou 2,
dans laquelle un côté d'extrémité du corps de couvercle (41) est fixé à l'écrou de vis (172) et une portion entre l'autre côté d'extrémité de celui-ci et la tige de vis (171) est étanchéifiée par l'élément d'étanchéité (47),
dans laquelle le trajet d'alimentation (45) est disposé sur le côté de l'écrou de vis (172) et
dans laquelle le premier trajet de collecte (46) est disposé sur le côté de l'élément d'étanchéité (47).

4. La machine de moulage par injection (10) selon l'une des revendications 1 à 3, comprenant en outre :
un deuxième couvercle (30) qui recouvre la tige de vis (171) sur l'autre côté d'extrémité de l'écrou de vis (172) ; et
un deuxième trajet de collecte (34) relié à l'unité d'aspiration (25) à travers laquelle un lubrifiant (L1, L2) est collecté dans un espace interne (31) du deuxième couvercle (30).

5. La machine de moulage par injection (10) selon la revendication 4, comprenant en outre :
une section d'admission (33) qui communique avec l'espace interne (31) du deuxième couvercle (30) et un espace externe ; et
un clapet anti-retour (35) qui est disposé dans la section d'admission (33) et qui est ouverte de façon à ce qu'une pression de l'espace interne (31) du deuxième couvercle (30) soit inférieure à une pression de l'espace externe.

6. La machine de moulage par injection (10) selon l'une des revendications 1 à 3,
dans laquelle le premier couvercle (40) est prévu sur l'autre côté d'extrémité de l'écrou de vis (172).

7. La machine de moulage par injection (10) selon l'une des revendications 1 à 6,
dans laquelle le mécanisme de conversion de mouvement (170) est utilisé dans l'unité de serrage de moule (100) et
dans laquelle l'écrou de vis (172) est fixé à une traverse (151).
